# EUROPÄISCHE PATENTANMELDUNG

(11) **EP 2 974 996 A1**
(43) Veröffentlichungstag der Anmeldung: **20.01.2016**
(21) Anmeldenummer: 14002482.9
(22) Anmeldetag: 17.07.2014
(51) Int. Cl.: B66F 9/14, B65G 1/04

(54) **Lastaufnahmevorrichtung für ein Regalbediengerät**

(71) Anmelder: MLOG Logistics GmbH, 74196 Neuenstadt am Kocher (DE)
(72) Erfinder: Georg Leichtle, 74193 Schwaigern (DE); Hartmut Schaffroth, 74196 Neuenstadt (DE); Thomas Waldbüßer, 74248 Ellhofen (DE)
(74) Vertreter: Schmid, Barbara

(57) **Zusammenfassung**

Eine Lastaufnahmevorrichtung 10 für ein Regalbediengerät besitzt ein Basiselement 12, das an dem Regalbediengerät befestigt werden kann, und zumindest ein teleskopierbar ausgebildetes Lastaufnahmemittel 14, das zumindest zwei Teleskopelemente 20, 22 aufweist. Das oberste Teleskopelement ist mit zumindest einem Aufnahmezinken ausgebildet und das unterste Teleskopelement 20 ist verschieblich an dem Basiselement gelagert. An dem Basiselement 12 ist eine Stützvorrichtung 16 gelagert, die unterhalb des Lastaufnahmemittels 14 angeordnet ist, so dass zumindest eines der Teleskopelemente 20 in seinem ausgefahrenen Zustand durch die Stützvorrichtung 16 abgestützt werden kann. Die Stützvorrichtung 16 besitzt zumindest einen ausfahrbaren Stützarm 30, an dessen äußerem Endbereich 32 zumindest ein Stützelement 34 vorhanden ist, auf dem zumindest eines der Teleskopelemente 20 in seinem ausgefahrenen Zustand abgestützt werden kann. Mit seinem unteren Ende ist das Stützelement 34 an einer Seilvorrichtung befestigt, durch die das Stützelement 34 so bewegt werden kann, dass das Stützelement 34 in seiner eingefahrenen Position in der Ebene des Stützarms und in seiner ausgefahrenen Position etwa senkrecht zur Ebene des Stützarms 30 vorhanden ist. Der Stützarm 30 kann verschwenkbar an dem Basiselement 12 gelagert sein.

## Beschreibung

### TECHNISCHES GEBIET

Die Erfindung betrifft eine Lastaufnahmevorrichtung für ein Regalbediengerät. Derartige Regalbediengeräte werden in Lagergassen von insbesondere Hochregallagern eingesetzt, um Lagergüter in Regallagerplätzen ein- oder auszulagern beziehungsweise umzulagern. Die Lagergüter sind dabei in der Regel auf Ladehilfsmitteln positioniert, so dass die Lastaufnahmemittel der Lastaufnahmevorrichtung mit ihren Aufnahmezinken in entsprechende Freiräume an der Unterseite des Ladehilfsmittels eingefahren werden können.

### STAND DER TECHNIK

Lastaufnahmemittel für Regalbediengeräte sind bekannt. Diese weisen in der Regel meist zwei oder mehrere Teleskopelemente auf. Die Teleskopelemente sind an einem Basiselement längsverschieblich gelagert, wobei das Basiselement an dem Regalbediengerät befestigt ist. Das unterste Teleskopelement ist direkt an dem Basiselement gelagert, das oberste Teleskopelement weist zumindest einen Aufnahmezinken auf, der in entsprechende Freiräume an der Unterseite des Ladehilfsmittels eingefahren werden kann. Zwischen dem untersten und dem obersten Teleskopelement kann ein einzelnes mittleres Teleskopelement vorhanden sein; es wäre auch möglich, mehrere mittlere Teleskopelemente vorzusehen. Im Gegensatz dazu kann das oberste Teleskopelement auch direkt an dem untersten Teleskopelement gelagert sein, so dass keine mittleren Teleskopelement vorhanden sind.

Aus der EP 0 697 368 A1 ist eine Lastaufnahmevorrichtung für ein Regalbediengerät mit zumindest einem teleskopierbar ausgebildeten Lastaufnahmemittel bekannt. Das Lastaufnahmemittel weist mehrere Teleskopelemente auf, von denen das oberste als Aufnahmezinken ausgebildet ist und das unterste an einem Basiselement verschieblich gelagert ist. Das Basiselement wiederum ist an dem Regalbediengerät befestigt. Entsprechend der EP 1 714 937 A1 kann an dem untersten Teleskopelement ein Stützelement ortsfest vorhanden sein, durch das dieses unterste Teleskopelement von unten abgestützt werden kann, um die Durchbiegung des untersten Teleskopelements zu reduzieren.

Das Regalbediengerät kann in der Lagergasse verfahren werden und vor dem entsprechenden Regalplatz positioniert werden. Zum Auslagern der Lagergüter wird das Lastaufnahmemittel ausgefahren, bis der oder die Aufnahmezinken in den Freiraum des Ladehilfsmittels positioniert ist beziehungsweise sind. Durch ein Anheben des Lastaufnahmemittels kann das Lagergut angehoben werden. Anschließend wird das Lastaufnahmemittel so weit eingefahren, dass das Lagergut aus dem Bereich des Regallagers entfernt ist und innerhalb der Lagergasse verfahren werden kann.

Automatische Hochregallager können eine zweifachtiefe Lagerung von Ladehilfsmitteln ermöglichen. Dabei sind in einem Regal zwei Lagerplätze hintereinander vorgesehen. Der hintere Lagerplatz kann nur erreicht werden, wenn der vordere Lagerplatz unbesetzt ist. Bauhöhenbedingt muss bei einer solchen zweifachtiefen Lagerung das hintere Ladehilfsmittel erhöht gelagert werden, um mit dem oder den Aufnahmezinken in den Freiraum des Ladehilfsmittels einfahren zu können. Dies ist dem großen Abstand zwischen dem hinteren Lagerplatz und dem Regalbediengerät und damit der großen Teleskopierlänge geschuldet. Dazu kommt das hohe Gewicht der anzuhebenden Last, so dass es insgesamt zu einer nicht unerheblichen Durchbiegung des Lastaufnahmemittels kommt. Durch den ungenutzten Raum durch die erhöhte Lagerung des hinteren Ladehilfsmittels geht wertvoller Stauraum in dem Regallager verloren.

Um die freitragende Länge des Lastaufnahmemittels im ausgefahrenen Zustand zu verkürzen, so dass sich die Durchbiegung des Lastaufnahmemittels reduziert, ist vorgeschlagen worden, unterhalb des Lastaufnahmemittels eine Stützvorrichtung anzuordnen, mittels der zumindest eines der Teleskopelemente des Lastaufnahmemittels in seinem ausgefahrenen Zustand abgestützt werden kann. Auf diese Weise kann sich auch bei gleicher Durchbiegung des Lastaufnahmemittels die ausfahrende Querschnittshöhe des Lastaufnahmemittels reduzieren. Insgesamt kann dadurch der Höhenversatz bei einer zweifachtiefen Lagerung der Ladehilfsmittel reduziert werden.

### DARSTELLUNG DER ERFINDUNG

Ausgehend von diesem vorbekannten Stand der Technik liegt der Erfindung die Aufgabe zugrunde, eine verbesserte Lastaufnahmevorrichtung mit Stützvorrichtung anzugeben, bei der eine Durchbiegung des Lastaufnahmemittels weiter reduziert werden kann.

Die erfindungsgemäße Lastaufnahmevorrichtung ist durch die Merkmale des Hauptanspruchs 1 gegeben. Sinnvolle Weiterbildungen der Erfindung sind Gegenstand von sich an diesen Anspruch anschließenden weiteren Ansprüchen.

Die erfindungsgemäße Lastaufnahmevorrichtung für ein Regalbediengerät besitzt ein Basiselement, das an dem Regalbediengerät befestigt werden kann. An dem Basiselement sind das unterste Teleskopelement eines teleskopierbar ausgebildeten Lastaufnahmemittels und eine Stützvorrichtung jeweils verschieblich gelagert. Die Stützvorrichtung ist unterhalb des Lastaufnahmemittels angeordnet, so dass zumindest eines der Teleskopelemente in seinem ausgefahrenen Zustand durch die Stützvorrichtung abgestützt werden kann, indem sich dieses auf einem Stützelement abstützt, das an dem äußeren Endbereich des ausfahrbaren Stützarms der Stützvorrichtung vorhanden ist. Erfindungsgemäß ist das Stützelement mit seinem unteren Ende an einer Seilvorrichtung befestigt. Durch die Seilvorrichtung kann das Stützelement so bewegt werden, dass das Stützelement in seiner eingefahrenen Position in der Ebene des Stützarms und in seiner ausgefahrenen Position etwa senkrecht zur Ebene des Stützarms vorhanden ist. Durch die Bewegung des Stützelements über eine Seilvorrichtung kann der eigentliche Antrieb für die Durchführung der Bewegung beispielsweise am Basiselement untergebracht werden und muss nicht innerhalb des Querschnitts des Stützarms untergebracht werden. Vielmehr kann der Stützarm massiv ausgebildet werden, da lediglich vergleichsweise dünne Seile innerhalb des Stützarms geführt werden müssen. Diese massive Bauweise des Stützarms führt zu einer verbesserten Stabilität desselben, so dass die von dem Lastaufnahmemittel übertragenen Kräfte optimal aufgenommen und die Durchbiegung des Lastaufnahmemittels somit weiter reduziert werden kann.

In einer besonders vorteilhaften Ausführungsform kann das Stützelement über zumindest eine Drehachse verschwenkbar an einem Schlitten gelagert sein. Der Schlitten selbst kann an der Seilvorrichtung befestigt sein. Durch den Einsatz eines Schlittens kann eine exakte Führung des unteren Endbereichs des Stützelements ermöglicht werden.

Der Stützarm kann an seinem äußeren Endbereich vorzugsweise eine Tasche aufweisen, innerhalb der das Stützelement in seiner eingefahrenen Position angeordnet ist. Durch eine am äußeren Randbereich des Stützarms angeordnete nach oben weisende Öffnung der Tasche kann das Stützelement aus dieser eingefahrenen Position ausgefahren werden, um etwa senkrecht zum Stützarm seine Stützfunktion wahrnehmen zu können. Das Stützelement ist somit platzsparend untergebracht und kann in seiner eingefahrenen Position nicht versehentlich beschädigt werden. Da beim Ausfahren des Stützarms gegebenenfalls Störkanten passiert werden müssen, ist ein solches Einklappen oder Einfahren des Stützelements auch notwendig.

In einer besonders bevorzugten Ausführungsform kann das Stützelement in seiner eingefahrenen Position über ein Rastelement in der Tasche des Stützarms lagefixiert werden.

Die Tasche kann an ihrem äußeren Endbereich eine Vertiefung aufweisen, in der das untere Ende des Stützelements in seiner ausgefahrenen Position positioniert werden kann. Vorzugsweise kann das untere Ende in dieser Position auch lagefixiert werden, um eine Sicherung des Stützelements zu bewirken. Diese Lagefixierung kann ebenfalls durch den Einsatz eines Schlittens ermöglicht werden, so dass eine Entlastung des Seils möglich ist, ohne dass es zu einer Bewegung des Schlittens und damit des Stützelements kommen würde. Die Seilvorrichtung wird somit nicht unnötig belastet, so dass sich deren Standzeit verlängern kann. Sobald das untere Ende auf diese Weise lagefixiert ist, wird die Relativverschiebung der Transportrolle der Seilvorrichtung gestoppt. Diese Position kann wieder gelöst werden, wenn die Relativverschiebung der Transportrolle in Gegenrichtung durchgeführt wird. Die Bewegung der Seilvorrichtung ist dabei unabhängig von der Position oder einer möglichen Bewegung des Stützarms.

Um ein reproduzierbares und verlässliches Aufrichten des Stützelements beim Ausfahren aus der Tasche zu ermöglichen, kann die Tasche an ihrem äußeren Endbereich ein Anschlagelement aufweisen, auf dem das Stützelement in seiner eingefahrenen Position mit seinem vorderen Bereich oben aufliegt. Beim Ausfahren des Stützelements gleitet dieses mit seiner Unterseite über das Anschlagelement drüber, bis es schließlich in seiner ausgefahrenen Position mit seinem unteren Ende, das an der Seilvorrichtung beziehungsweise an dem Schlitten befestigt ist, seitlich an diesem Anschlagelement anliegt.

Bei einer besonders vorteilhaften Ausführungsform, die auch von eigenständiger erfinderischer Bedeutung ist, kann der Stützarm verschwenkbar an dem Basiselement gelagert sein. Die ermöglicht es, die Neigung des Stützarms anzupassen, so dass eine besonders effektive Art der Abstützung des Lastaufnahmemittels möglich ist. Erst nach dem Erreichen der endgültigen vertikalen Position des Stützelements erfolgt das Verschwenken des Stützarms. Dies kann nach dem Passieren des ersten Auflageträgers erfolgen.

In einer ersten Ausführungsform kann diese verschwenkbare Lagerung dadurch realisiert werden, dass der Stützarm über eine Kulissenführung an dem Basiselement gelagert ist. Bei einer solchen Kulissenführung handelt es sich um ein Getriebeelement zur Kraftübertragung. Die Kulisse weist regelmäßig einen Schlitz, einen Steg oder eine Nut auf, durch die ein Kulissenstein beidseitig zwangsgeführt ist. Die Übertragungsfunktion wird ausschließlich durch den Verlauf des Schlitzes, des Steges beziehungsweise der Nut bestimmt und ist in weiten Grenzen frei wählbar. Eine solche Kulisse kann beispielsweise aufgefräßt sein, so dass abhängig von dem Ausfahren des Stützarms auch das Kippen desselben erfolgt. Eine solche Kulissenführung ist vergleichsweise kostengünstig zu realisieren und ermöglicht ein exaktes und reproduzierbares Verschwenken des Stützarms. Sie bietet sich daher insbesondere in den Fällen an, in denen vergleichbare Lasten angehoben werden sollen, so dass jeweils ähnliche Durchbiegungen des Lastaufnahmemittels zu erwarten sind.

Sofern dagegen die Neigung des Stützarms individuell an unterschiedliche Gegebenheiten angepasst werden soll, kann das Verschwenken des Stützarms alternativ oder zusätzlich dazu über eine Exzenterwelle erfolgen.

Weitere Vorteile und Merkmale der Erfindung sind den in den Ansprüchen ferner angegebenen Merkmalen sowie dem nachstehenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: eine perspektivische Darstellung der erfindungsgemäßen Lastaufnahmevorrichtung mit Basiselement, Lastaufnahmemittel und Stützvorrichtung,
- Fig. 2: eine Darstellung gemäß Fig. 1, bei der die Stützvorrichtung nach oben verschwenkt wurde,
- Fig. 3: eine perspektivische Darstellung der Stützvorrichtung mit einem ausgefahrenen Stützelement an dem einen und einem eingefahrenen Stützelement an dem anderen Endbereich des Stützarms, wobei die unteren Abdeckplatten am Endbereich des Stützarms jeweils entfernt wurden,
- Fig. 4: einen Querschnitt durch den äußeren Endbereich des Stützarms mit ausgefahrenem Stützelement,
- Fig. 5: einen Querschnitt durch den äußeren Endbereich des Stützarms mit eingefahrenem und verrastetem Stützelement,
- Fig. 6: einen Längsschnitt durch den äußeren Endbereich des Stützarms mit ausgefahrenem Stützelement in seiner entriegelten Position,
- Fig. 7: einen Längsschnitt durch den äußeren Endbereich des Stützarms mit ausgefahrenem Stützelement in seiner verriegelten Position und
- Fig. 8: eine schematische Ansicht der Seilvorrichtung zum Ein- und Ausfahren der Schlitten für die Stützelemente.

### WEGE ZUM AUSFÜHREN DER ERFINDUNG

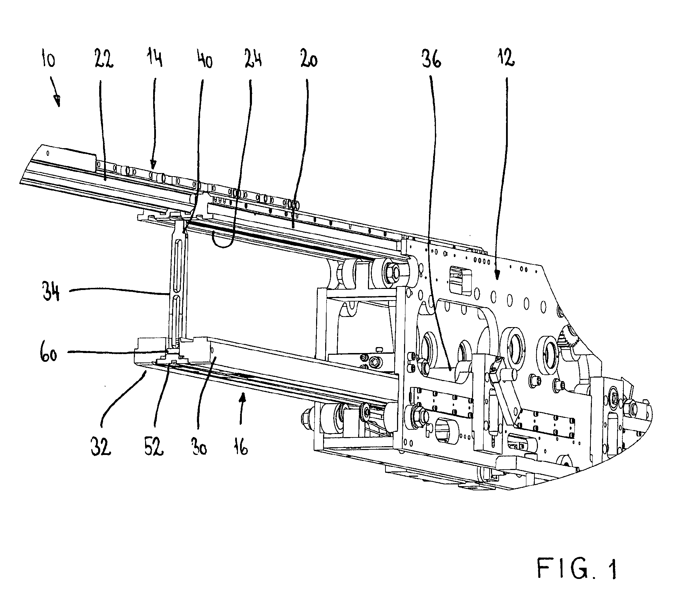

Die erfindungsgemäße Lastaufnahmevorrichtung 10 für ein Regalbediengerät ist in Fig. 1 ausschnittsweise dargestellt. Die Lastaufnahmevorrichtung 10 besitzt ein Basiselement 12, an dem ein Lastaufnahmemittel 14 und eine Stützvorrichtung 16 jeweils verschieblich gelagert sind.

Das Lastaufnahmemittel 14 besitzt mehrere Teleskopelemente 20, 22, von denen das unterste Teleskopelement 20 und das an diesem untersten Teleskopelement 20 gelagerte weitere Teleskopelement 22 dargestellt sind. Bei diesem weiteren Teleskopelement 22 kann es sich bereits um das oberste Teleskopelement mit Aufnahmezinken handeln. Das weitere Teleskopelement 22 könnte jedoch auch ein mittleres Teleskopelement darstellen, an dem zumindest noch ein weiteres Teleskopelement gelagert ist. Das unterste Teleskopelement 20 ist längsverschieblich an dem Basiselement 12 gelagert, wie dies aus dem Stand der Technik bereits bekannt ist.

Die Stützvorrichtung 16 besitzt einen Stützarm 30, der längsverschieblich an dem Basiselement 12 gelagert ist. An dem äußeren Endbereich 32 des Stützarms 30 befindet sich ein Stützelement 34, das in Fig. 1 in seiner ausgefahrenen Position dargestellt ist. Das Stützelement 34 ist in dieser ausgefahrenen Position etwa senkrecht zur Ebene des Stützarms 30 angeordnet.

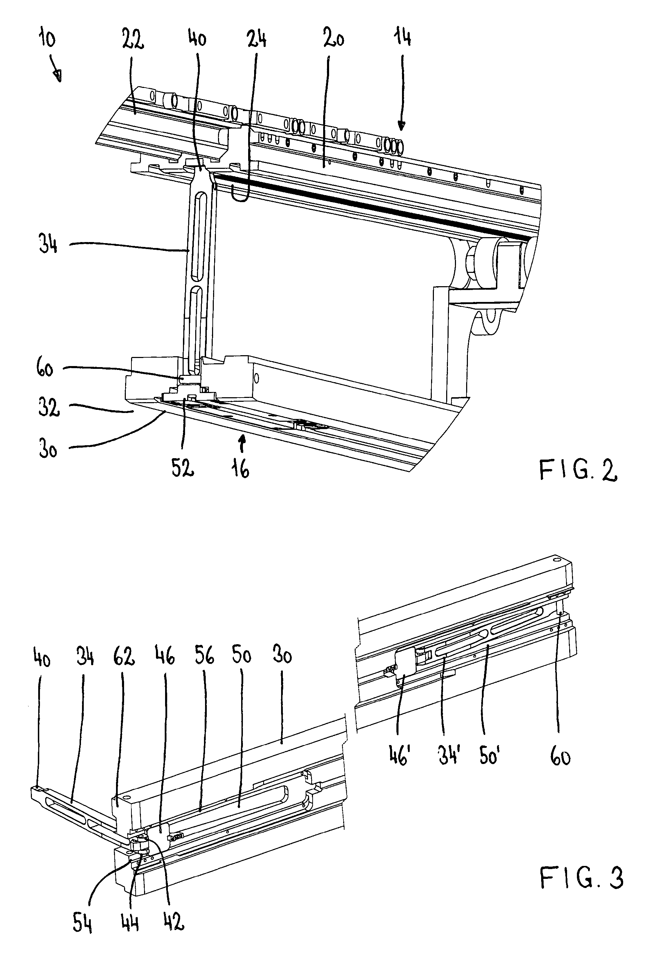

Sowohl das Lastaufnahmemittel 14 als auch die Stützvorrichtung 16 können jeweils in beide Richtungen aus dem Basiselement 12 ausgefahren werden. Gemäß Fig. 1 sind Lastaufnahmemittel 14 und Stützvorrichtung 16 nach links aus dem Basiselement 12 ausgefahren worden. Da regelmäßig zwei parallele, voneinander beabstandete Regale durch ein zwischen diesen beiden Regalen verfahrbares Regalbediengerät versorgt werden, können das Lastaufnahmemittel 14 und die Stützvorrichtung 16 auch in die entgegengesetzte Richtung (in Fig. 1 also nach rechts) aus dem Basiselement 12 ausgefahren werden. Entsprechend ist auch an dem anderen äußeren Endbereich 32' des Stützarms 30 ein Stützelement 34' vorhanden (siehe Fig. 3).

Der Stützarm 30 ist im vorliegenden Beispielsfall über eine Exzenterwelle 36 so an dem Basiselement 12 gelagert, dass die Neigung des Stützarms 30 geringfügig geändert werden kann. Gemäß Fig. 1 ist zwischen dem oberen Ende 40 des Stützelements 34 und der Unterseite 24 des untersten Teleskopelements 20 des Lastaufnahmemittels 14 ein gewisser Abstand vorhanden. Durch ein leichtes Verschwenken des Stützarms 30 in Richtung des Uhrzeigersinns kann dieser Abstand reduziert werden, so dass dieses obere Ende 40 des Stützelements 34 nunmehr gegen die Unterseite 24 des untersten Teleskopelements 20 drückt (siehe Fig. 2). Dadurch kann die freitragende Länge des Lastaufnahmemittels 14 reduziert werden und das Gewicht des Lastaufnahmemittels 14 und des von dem Lastaufnahmemittel 14 angehobenen Lagerguts optimal von der Stützvorrichtung 16 aufgenommen werden, so dass die Durchbiegung des Lastaufnahmemittels 14 weiter reduziert werden kann. Darüber hinaus kann durch das frühzeitige Anheben des Stützarms 30 ein Formschluss mit dem Lastaufnahmemittel 14 hergestellt werden, was Abweichungen der Positionen während der Synchronfahrt kompensieren lässt.

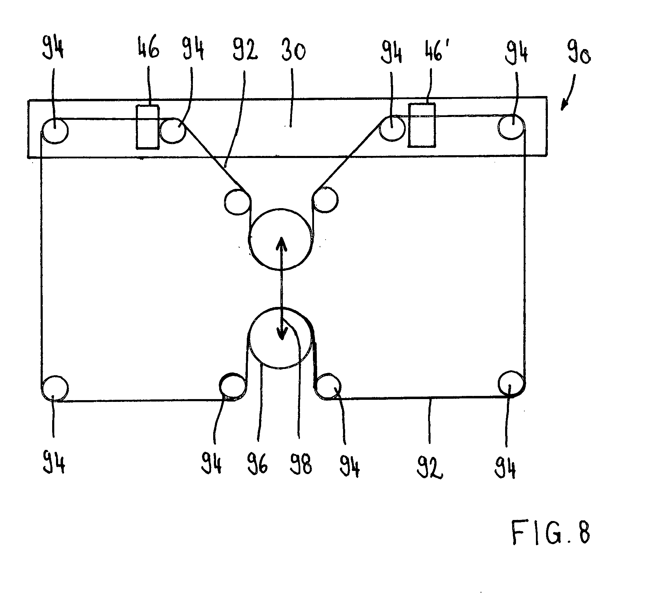

Das Stützelement 34, 34' muss aus dieser ausgefahrenen Position eingeklappt oder eingefahren werden, um gegebenenfalls im Regal vorhandene Querträger passieren zu können. Erfindungsgemäß wird dieses Einfahren dadurch ermöglicht, dass das untere Ende 42 des Stützelement 34, 34' über eine Drehachse 44 an einem Schlitten 46, 46' gelagert ist. Die Schlitten 46, 46' sind wiederum an einer Seilvorrichtung 90 befestigt. Durch die Verschiebung der Transportrolle 96 (siehe Fig. 8) werden die Schlitten 46, 46' und damit auch die Stützelemente 34, 34' bewegt.

Das Stützelement 34, 34' kann auf diese Weise in eine am äußeren Endbereich 32, 32' des Stützarms 30 vorhandene Tasche 50, 50' eingefahren werden. In dieser eingefahrenen Position ist das Stützelement 34, 34' vollständig innerhalb des Stützarms 30 vorhanden. Die Tasche 50, 50' kann durch das Entfernen einer unteren Abdeckplatte 52 des Stützarms 30 von unten zugänglich gemacht werden. Dies kann beispielsweise zu Wartungs- oder Reinigungszwecken erforderlich sein. Der Schlitten 46, 46' sitzt oben auf dieser unteren Abdeckplatte 52 auf und kann auf dieser hin- und herverschoben werden. Von oben wird der Schlitten 46, 46' durch zwei seitliche Schulterausbildungen 54, 56 begrenzt, so dass für den Schlitten 46, 46' lediglich eine Bewegung parallel zur Ebene des Stützarms 30 möglich ist.

In seiner ausgefahrenen Position liegt der untere Bereich des Stützelements 34, 34' seitlich an einem innerhalb der Tasche 50, 50' angeordneten Anschlagelement 60 an. Dieses Anschlagelement erleichtert das Aufrichten des Stützelements 34, 34' beim Ausfahren aus der Tasche 50, 50'. So liegt das Stützelement 34, 34' in seiner eingefahrenen Position mit seinem oberen Bereich auf dem Anschlagelement 60 auf. Sofern der Schlitten 46, 46' innhalb der Tasche 50, 50' in Richtung des äußeren Randbereichs 62, 62' des Stützarms 30 verfahren wird, gleitet die Unterseite des Stützelements 34, 34' an diesem Anschlagelements 60 entlang und richtet sich auf, da das untere Ende 42 des Stützelements 34, 34' durch den Schlitten 46, 46' in seiner anfänglichen Ebene gehalten wird. Das Stützelement 34, 34' tritt dabei aus einer nach oben weisenden Öffnung 64 am äußeren Randbereich 62, 62' des Stützarms 30 aus der Tasche 50, 50' aus.

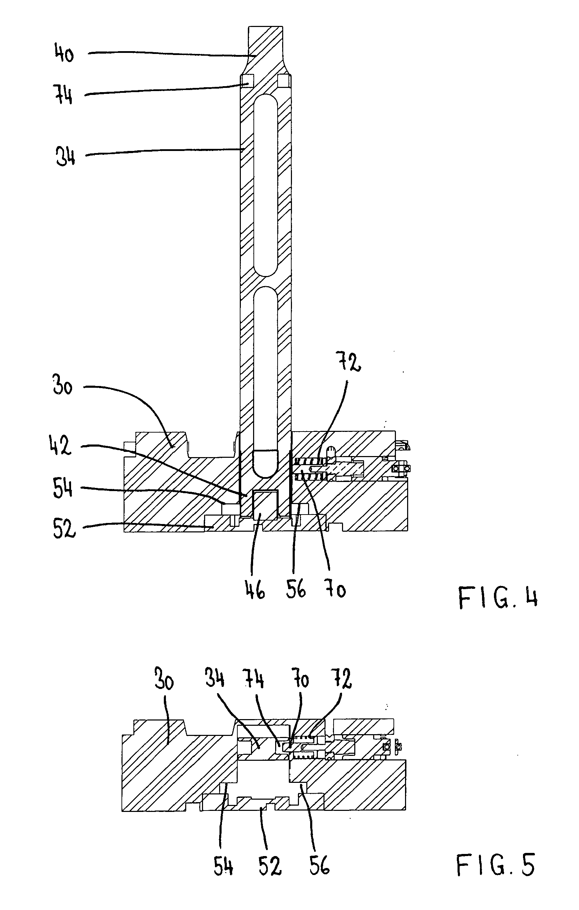

Im eingefahrenen Zustand kann das Stützelement 34, 34' gemäß Fig. 5 in seiner Position lagefixiert werden. Dazu ist am äußeren Endbereich der Tasche 50, 50' ein Stift 70 vorhanden, der über eine Feder 72 verschieblich in der Seitenwand der Tasche 50, 50' gelagert ist. Sofern sich das Stützelement 34, 34' in seiner eingefahrenen Position innerhalb der Tasche 50, 50' befindet, kann dieser Stift in eine entsprechende Bohrung 74 am oberen Ende 40 des Stützelements 34 eingreifen. Das Stützelement 34, 34' ist somit in seiner Lage fixiert.

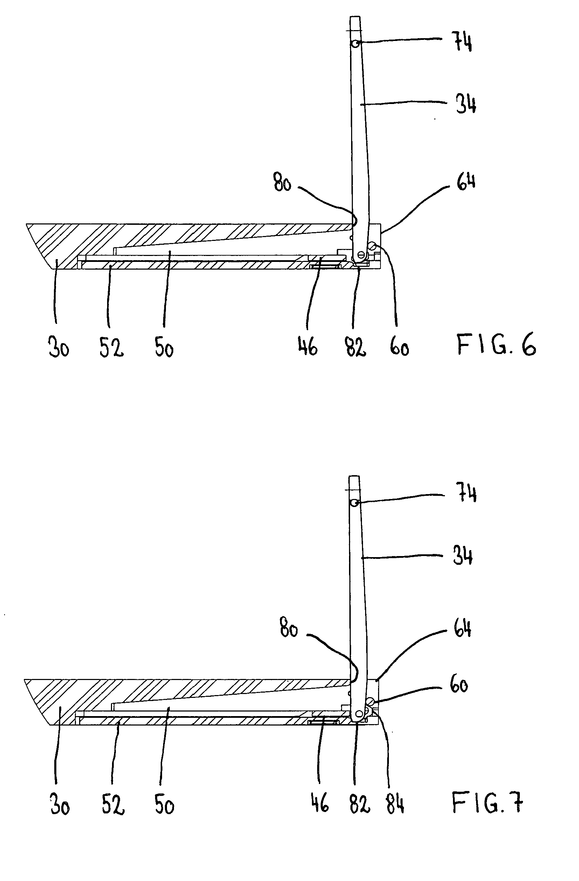

Auch im ausgefahrenen Zustand ist eine Lagefixierung des Stützelements 34 möglich (siehe Fig. 7). Sobald sich das Stützelement 34 vollständig aufgerichtet hat, drückt der Schlitten 46 das untere Ende 42 des Stützelements 34 von innen an das Anschlagelement 60. Dadurch drückt sich das Stützelement 34' von außen an den Rand 80 der Öffnung 64 der Tasche 50. Dadurch, dass das Stützelement 34 über eine weitere, zweite Drehachse an dem Schlitten 46 befestigt ist, kann das Stützelement 34 nunmehr nach unten in eine in der Tasche vorhandene Vertiefung 82 rutschen. Dabei wird ein an dem Schlitten 46 vorhandener Vorsprung 84 weiter nach außen geschoben, so dass dieser Vorsprung 84 zwischen dem Rand der Vertiefung 82 und dem Anschlagelement 60 zu Liegen kommt.

In Fig. 8 ist der Verlauf der Seilverbindung 90 schematisch dargestellt. Die Seilverbindung 90 besitzt ein einzelnes Seil 92, das gemäß Fig. 8 in eine Acht gelegt wurde und über mehrere Umlenkrollen 94 in Position gehalten wird. Ein Teil des Seils 92 verläuft innerhalb des Stützarms 30. An dem Seil 92 sind die beiden Schlitten 46, 46' fixiert. Das Seil 92 ist an seinem Kreuzungspunkt über eine Transportrolle 96 geführt. Diese Transportrolle 96 kann in Richtung des Doppelpfeils 98 entlang einer Geraden verschoben werden, wodurch sich das Seil 92 jeweils mitbewegt.

Die genaue Führung des Seils 92 innerhalb des Stützarms 30 und auch des Basiselements 12 kann an die jeweiligen Gegebenheiten angepasst werden. So kann eine fast beliebige Anzahl an Umlenkrollen 94 für die Seilverbindung 90 eingesetzt werden. Lediglich die Transportrolle 96 muss dabei beispielsweise durch einen motorischen Antrieb antreibbar sein oder beispielsweise auch über eine zwangsgeführte Bahnkulisse versetzt werden.

## Patentansprüche

1. Lastaufnahmevorrichtung (10) für eine mobile Maschine, insbesondere für ein Regalbediengerät,
- mit einem Basiselement (12), das an der mobilen Maschine befestigbar ist,
- mit zumindest einem teleskopierbar ausgebildeten Lastaufnahmemittel (14), das zumindest zwei Teleskopelemente (20, 22) aufweist,
-- wobei das oberste Teleskopelement mit zumindest einem Aufnahmezinken ausgebildet ist,
-- wobei das unterste Teleskopelement (20) an dem Basiselement (12) verschieblich gelagert ist,
- mit einer Stützvorrichtung (16), die an dem Basiselement (12) gelagert ist,
-- wobei die Stützvorrichtung (16) unterhalb des Lastaufnahmemittels (14) angeordnet ist, so dass zumindest eines der Teleskopelemente (20) in seinem ausgefahrenen Zustand durch die Stützvorrichtung (16) abstützbar ist,
-- wobei die Stützvorrichtung (16) zumindest einen ausfahrbaren Stützarm (30) aufweist, an dessen äußerem Endbereich (32, 32') zumindest ein Stützelement (34, 34') vorhanden ist, auf dem zumindest eines der Teleskopelemente (20) in seinem ausgefahrenen Zustand abstützbar ist,
- **dadurch gekennzeichnet, dass**
- das Stützelement (34, 34') mit seinem unteren Ende (42) an einer Seilvorrichtung (90) befestigt ist,
- das Stützelement (34, 34') durch die Seilvorrichtung (90) so beweglich ist, dass das Stützelement (34, 34') in seiner eingefahrenen Position in der Ebene des Stützarms (30) und in seiner ausgefahrenen Position etwa senkrecht zur Ebene des Stützarms (30) vorhanden ist.

2. Lastaufnahmevorrichtung nach Anspruch 1,
- **dadurch gekennzeichnet, dass**
- das Stützelement (34, 34') über zumindest eine Drehachse (44) verschwenkbar an einem Schlitten (46, 46') gelagert ist,
- der Schlitten (46,46') an der Seilvorrichtung (90) befestigt ist.

3. Lastaufnahmevorrichtung nach Anspruch 1 oder 2,
- **dadurch gekennzeichnet, dass**
- der Stützarm (30) an seinem äußeren Endbereich (32, 23') eine Tasche (50, 50') aufweist, innerhalb der das Stützelement (34, 34') in seiner eingefahrenen Position angeordnet ist.
- die Tasche (50, 50') am äußeren Randbereich (62, 62') des Stützarms (30) eine nach oben weisende Öffnung (64) aufweist.

4. Lastaufnahmevorrichtung nach Anspruch 3,
- **dadurch gekennzeichnet, dass**
- das Stützelement in seiner eingefahrenen Position in der Tasche über ein Rastelement lagefixierbar ist.

5. Lastaufnahmevorrichtung nach Anspruch 3 oder 4,
- **dadurch gekennzeichnet, dass**
- die Tasche (50,50') an ihrem äußeren Endbereich eine Vertiefung (82) aufweist, in der das untere Ende (42) des Stützelements (34, 34') in seiner ausgefahrenen Position positionierbar ist.

6. Lastaufnahmevorrichtung nach Anspruch 5,
- **dadurch gekennzeichnet, dass** das untere Ende (42) des Stützelements (34,34') in seiner ausgefahrenen Position in dieser Vertiefung (82) lagefixierbar ist.

7. Lastaufnahmevorrichtung nach einem der Ansprüche 3 bis 6,
- **dadurch gekennzeichnet, dass**
- die Tasche (50,50') an ihrem äußeren Endbereich ein Anschlagelement (60) aufweist,
- das Stützelement (34, 34') in seiner eingefahrenen Position mit seinem vorderen Bereich oben auf diesem Anschlagelement (60) aufliegt und
- das Stützelement (34, 34') in seiner ausgefahrenen Position mit seinem unteren Bereich seitlich an diesem Anschlagelement (60) anliegt.

8. Lastaufnahmevorrichtung (10) für eine mobile Maschine, insbesondere für ein Regalbediengerät,
- mit einem Basiselement (12), das an der mobilen Maschine befestigbar ist,
- mit zumindest einem teleskopierbar ausgebildeten Lastaufnahmemittel (14), das zumindest zwei Teleskopelemente (20, 22) aufweist,
-- wobei das oberste Teleskopelement mit zumindest einem Aufnahmezinken ausgebildet ist,
-- wobei das unterste Teleskopelement (20) an dem Basiselement (12) verschieblich gelagert ist,
- mit einer Stützvorrichtung (16), die an dem Basiselement (12) gelagert ist,
-- wobei die Stützvorrichtung (16) unterhalb des Lastaufnahmemittels (14) angeordnet ist, so dass zumindest eines der Teleskopelemente (20) in seinem ausgefahrenen Zustand durch die Stützvorrichtung (16) abstützbar ist,
-- wobei die Stützvorrichtung (16) zumindest einen ausfahrbaren Stützarm (30) aufweist, an dessen äußerem Endbereich (32, 32') zumindest ein Stützelement (34, 34') vorhanden ist, auf dem zumindest eines der Teleskopelemente (20) in seinem ausgefahrenen Zustand abstützbar ist,
- **dadurch gekennzeichnet, dass**
- der Stützarm (30) verschwenkbar an dem Basiselement (12) gelagert ist.

9. Lastaufnahmevorrichtung nach Anspruch 8,
- **dadurch gekennzeichnet, dass**
- der Stützarm über eine Kulissenführung an dem Basiselement gelagert ist.

10. Lastaufnahmevorrichtung nach Anspruch 8 oder 9,
- **dadurch gekennzeichnet, dass**
- der Stützarm (30) über eine Exzenterwelle (36) verschwenkbar an dem Basiselement (12) gelagert ist.

## Geänderte Patentansprüche

### Geänderte Patentansprüche gemäss Regel 137(2) EPÜ.

1. Lastaufnahmevorrichtung (10) für eine mobile Maschine, insbesondere für ein Regalbediengerät,
- mit einem Basiselement (12), das an der mobilen Maschine befestigbar ist,
- mit zumindest einem teleskopierbar ausgebildeten Lastaufnahmemittel (14), das zumindest zwei Teleskopelemente (20, 22) aufweist,
- - wobei das oberste Teleskopelement mit zumindest einem Aufnahmezinken ausgebildet ist,
- - wobei das unterste Teleskopelement (20) an dem Basiselement (12) verschieblich gelagert ist,
- mit einer Stützvorrichtung (16), die an dem Basiselement (12) gelagert ist,
- - wobei die Stützvorrichtung (16) unterhalb des Lastaufnahmemittels (14) angeordnet ist, so dass zumindest eines der Teleskopelemente (20) in seinem ausgefahrenen Zustand durch die Stützvorrichtung (16) abstützbar ist,
- - wobei die Stützvorrichtung (16) zumindest einen ausfahrbaren Stützarm (30) aufweist, an dessen äußerem Endbereich (32, 32') zumindest ein Stützelement (34, 34') vorhanden ist, auf dem zumindest eines der Teleskopelemente (20) in seinem ausgefahrenen Zustand abstützbar ist,
- **dadurch gekennzeichnet, dass**
- der Stützarm (30) verschwenkbar an dem Basiselement (12) gelagert ist.

2. Lastaufnahmevorrichtung nach Anspruch 1,
- **dadurch gekennzeichnet, dass**
- der Stützarm über eine Kulissenführung an dem Basiselement gelagert ist.

3. Lastaufnahmevorrichtung nach Anspruch 1 oder 2,
- **dadurch gekennzeichnet, dass**
- der Stützarm (30) über eine Exzenterwelle (36) verschwenkbar an dem Basiselement (12) gelagert ist.
